# EUROPÄISCHE PATENTANMELDUNG

(11) **EP 0 593 853 A1**
(43) Veröffentlichungstag der Anmeldung: **27.04.1994**
(21) Anmeldenummer: 93110896.3
(22) Anmeldetag: 07.07.1993
(51) Int. Cl.: A01D 34/68, A01B 71/00

(54) **Fahrbares Gartengerät mit Motorantrieb für Werkzeug und Räder**

(30) Priorität: 09.07.1992 DE 4222578
(71) Anmelder: WOLF-Geräte GmbH Vertriebsgesellschaft KG, D-57518 Betzdorf (DE)
(72) Erfinder: Held, Peter, D-57584 Scheuerfeld (DE); Le Bihan, Bernd, D-57581 Katzwinkel (DE)
(74) Vertreter: Koch, Günther, Dipl.-Ing.

(57) **Zusammenfassung**

Bei einem mit Fahrantrieb versehenen Gartengerät werden die Werkzeuge, beispielsweise ein Mähwerkzeug, von einem Motor angetrieben, der auch mit den Antriebsrädern gekuppelt ist. Zwischen Motor und Antriebsrädern ist ein Getriebe eingeschaltet, welches die Drehzahl der Antriebsräder mit zunehmendem Leistungsbedarf bzw. zunehmendem Drehmoment verringert und umgekehrt. Dadurch wird z.B. bewirkt, daß bei hohem Mähwiderstand der Vorschub des Mähers geringer ist als bei geringem Mähwiderstand. Als Getriebe kann ein Keilriemenscheibengetriebe mit variablen Radien benutzt werden, wobei die axiale Verstellung der Keilriemenscheibenhälften (30,32) in Abhängigkeit von dem Lastmoment bewirkt wird. Diese Einstellung kann gegen die Wirkung von Rückstellfedern über schraubenförmige Gewindegänge erfolgen, die beispielsweise in Gestalt eines Kugelformschlusses ausgebildet sein können.

## Beschreibung

Die Erfindung bezieht sich auf ein fahrbares Gartengerät mit einem Motor zum Antrieb der Werkzeuge und der Räder. Derartige Gartengeräte sind z.B. als handgeführte oder auch selbstfahrende Rasenmäher weit verbreitet. Auch bei den handgeführten Rasenmähern besteht zum überwiegenden Teil die Möglichkeit, die Fahrtgeschwindigkeit einzustellen. Es ist auch bekannt, die Fahrtgeschwindigkeit über stufenlose Variogetriebe einzustellen, wobei das Übersetzungsverhältnis jeweils durch die Bedienungsperson gewählt werden mußte.

Es ist bekannt, daß es für das Schneid- und Fangergebnis beim Rasenmähen von Vorteil ist, wenn bei starkem Grasbewuchs der Rasenmäher langsamer bewegt wird als bei geringer bewachsenen Rasenflächen. Es ist jedoch schwierig für die Bedienungsperson zu beurteilen, welche Vorschubgeschwindigkeit für die jeweilige Mähsituation günstig ist, so daß häufig mit zu großer Vorschubgeschwindigkeit gearbeitet wurde, was zu einem Stillstand des Motors führen konnte oder zumindest zu einem schlechten Schneid- und Fangergebnis.

Der Erfindung liegt die Aufgabe zugrunde, ein Gartengerät mit Fahrantrieb zu schaffen, welches in der Lage ist die günstigste Beziehung zwischen dem Schneidvorgang und der Vorschubgeschwindigkeit automatisch einzustellen.

Gelöst wird die gestellte Aufgabe durch die im Kennzeichnungsteil des Anspruchs 1 angegebenen Merkmale.

Die Erfindung ist anwendbar auf die verschiedensten Typen von Gartengeräten oder auch landwirtschaftlichen Geräten, wobei der Antrieb entweder durch eine Brennkraftmaschine oder durch einen Elektromotor erfolgen kann.

Der Erfindung liegt demgemäß die Erkenntnis zugrunde, daß die automatische Geschwindigkeitseinstellung durch Reaktionskräfte des für den Antrieb der Werkzeuge eingeleiteten Drehmoments ausgenutzt werden kann.

Die Erfindung kann in Verbindung mit der üblichen Standardregelung bei Elektromotoren oder Brennkraftmaschinen Anwendung finden. Diese Antriebsmotore haben die Eigenschaft, daß die Drehzahl im Lastzustand geringer ist als die Drehzahl im Leerlaufbereich. Diese Drehzahlreduzierung im Lastbereich führt beispielsweise bei hohem Grasanfall eines Rasenmähers dazu, daß die Umfangsgeschwindigkeit des Messers herabgesetzt wird, was das Schneid- und Fangergebnis verschlechtert. Diese Wirkung kann erfindungsgemäß dadurch kompensiert werden, daß die Fahrgeschwindigkeit des Mähers über die Reduzierung, die aus dem Drehzahlabfall im Lastbereich erfolgt, durch die automatische Geschwindigkeitsreglung zusätzlich um einen gewissen Betrag vermindert wird.

Die Erfindung kann jedoch auch vorteilhaft in Verbindung mit einer leistungsangepaßten Regelung benutzt werden, wie diese in der DE-OS 42 01 151 vorgeschlagen ist, d.h. die vorliegende Erfindung zur Steuerung der Fahrgeschwindigkeit kann mit einer Vorrichtung kombiniert werden, bei der in Abhängigkeit von der an den Werkzeugen auftretenden Belastung die Antriebsdrehzahl auf einen vorbestimmten Wert eingestellt wird. Eine derartige Regelung bzw. Steuerung erhöht mit zunehmender Last die Motordrehzahl, um das Schneid- und Fangergebnis bei hohem Grasanfall zu verbessern. Wenn die Steuer- bzw. Regelung gemäß dem erwähnten Vorschlag in Verbindung mit einem Fahrantrieb benutzt wird, erhöht sich jedoch auch die Fahrgeschwindigkeit analog der Drehzahlerhöhung des Antriebsmotors, was im Lastfall unerwünscht ist. Durch Kombination mit der vorliegenden Erfindung kann mit der automatischen Geschwindigkeitsregelung die Drehzahlerhöhung des Antriebsmotors derart kompensiert werden, daß der Mäher immer mit einer konstanten Antriebsgeschwindigkeit arbeitet oder im Lastbetrieb etwas langsamer fährt.

Die erwähnten Vorteile können nicht nur bei Rasenmähern erlangt werden, sondern auch bei zahlreichen anderen Gartengeräten, beispielsweise Vertikutiervorrichtungen oder auch Erntemaschinen.

Zur automatischen Einstellung der Fahrgeschwindigkeit in Abhängigkeit von der Belastung ist die Anwendung eines stufenlosen Getriebes zweckmäßig. Hierzu bietet sich aus Gründen der Einfachheit der Konstruktion und aus Kostengründen ein Variogetriebe mit Keilriemenscheiben an, deren Wirkdurchmesser durch axiales Spreizen der Riemenscheibenhälften verändert werden kann. Eine derartige Varioriemenscheibe kann auf der Antriebswelle des Motors sitzen und lastabhängig verstellt werden, während ein Antriebsriemen nach einer weiteren Riemenscheibe geführt ist, die direkt oder über ein Getriebe mit den Antriebsrädern in Verbindung steht.

Zweckmäßige Ausgestaltungen der Erfindung ergeben sich aus den Unteransprüchen.

Nachstehend werden Ausführungsbeispiele der Erfindung anhand der Zeichnung beschrieben. In der Zeichnung zeigen:
Fig. 1 eine schematische Seitenansicht eines Rasenmähers mit vertikaler Rotorwelle zum Antrieb eines Messerbalkens und eines Radantriebes;
Fig. 2 eine erste Ausführungsform eines auf der Rotorantriebswelle sitzenden Getriebes mit Schnittansichten nach der Linie II-II von oben und unten her betrachtet;
Fig. 3 die Getriebeanordnung nach Fig. 2 in einer anderen Arbeitsstellung;
Fig. 4A und 4B eine Abwicklung des Kugelformschlusses des Getriebes nach Fig. 2 und 3 in zwei Arbeitsstellungen;
Fig. 5 eine weitere Ausführungsform eines auf der Rotorwelle sitzenden Getriebes zusammen mit axialen Ansichten;
Fig. 6 die in Fig. 5 dargestellte Getriebeanordnung in einer anderen Arbeitsstellung;
Fig. 7 bis 9 im Aufriß und Grundriß gezeichnete Einzelheiten der Getriebeanordnung gemäß Fig. 5 und 6.
Fig. 10 einen Axialschnitt einer weiteren Ausführungsform eines auf der Rotorantriebswelle sitzenden Getriebes;
Fig. 11 eine schematische Ansicht eines Rasenmähers mit zwei weiteren Möglichkeiten einer Fahrgeschwindigkeitssteuerung;
Fig. 12 ein Blockschaltbild der Systematik Motorregelung/Fahrantriebsregelung;

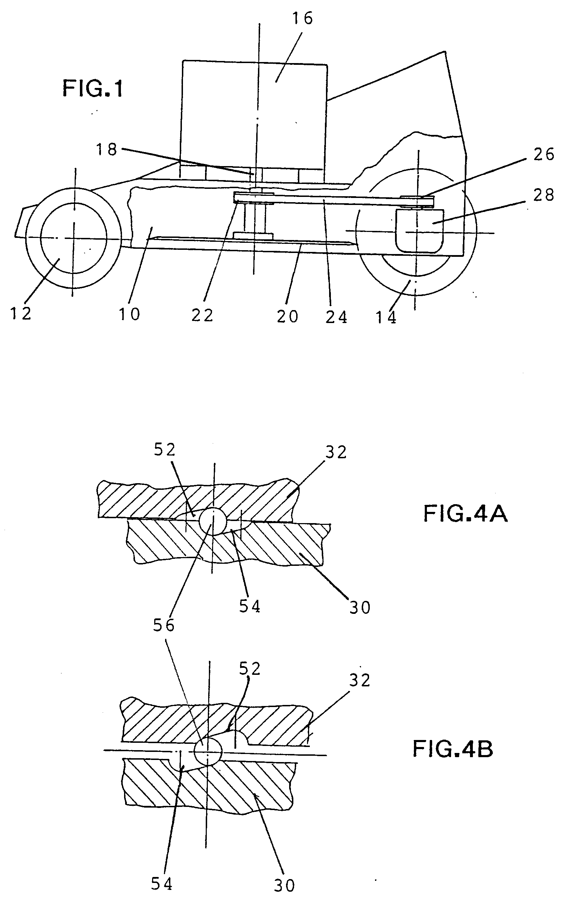

Der in Figur 1 als Ausführungsbeispiel dargestellte Rasenmäher weist ein Chassis 10 mit Laufrädern 12 und Antriebsrädern 14 auf. Das Chassis trägt einen Motor 16, der als Brennkraftmaschine oder als Elektromotor ausgebildet sein kann. Die Rotorantriebswelle 18 des Motors 16 steht vertikal und trägt am unteren Ende einen horizontal umlaufenden Messerbalken 20. Auf der Antriebswelle 18 sitzt eine Keilriemenscheibe 22 variablen Durchmessers, die über einen Keilriemen 24 mit einer Keilriemenscheibe 26 verbunden ist. Die Keilriemenscheibe 26 sitzt auf der Antriebswelle eines Getriebes 28, dessen Abtriebswellen die Antriebsräder 14 antreiben.

Wie im einzelnen weiter unten beschrieben wird ist die Anordnung derart getroffen, daß bei Erhöhung der auf den Messerbalken 20 einwirkenden Belastung die Keilriemenscheibe 22 gespreizt wird und auf einen kleineren Druchmesser übergeht, so daß die Drehzahl, mit der die Antriebsräder 14 angetrieben werden, abfällt. Umgekehrt vergrößert sich der wirksame Durchmesser der Riemenscheibe 22 bei sich verringernder Last, wodurch die Fahrgeschwindigkeit erhöht wird. Hierdurch wird es möglich, für einen Rasenmäher oder andere Gartengeräte die Fahrtantriebsgeschwindigkeit dem jeweiligen Lastzustand automatisch anzupassen. Das Prinzip der automatischen Geschwindigkeitseinstellung beruht darauf, daß Reaktionskräfte des für den Antrieb des Gartengerätes eingeleiteten Drehmoments zur Verstellung der Keilriemenscheibe oder eines anderen Antriebsgliedes ausgenutzt werden.

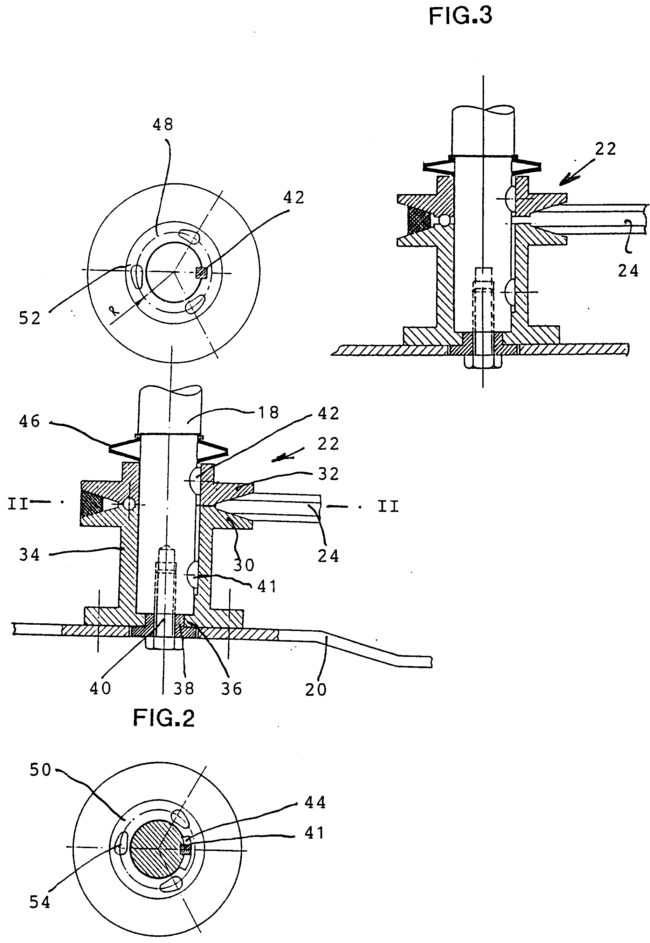

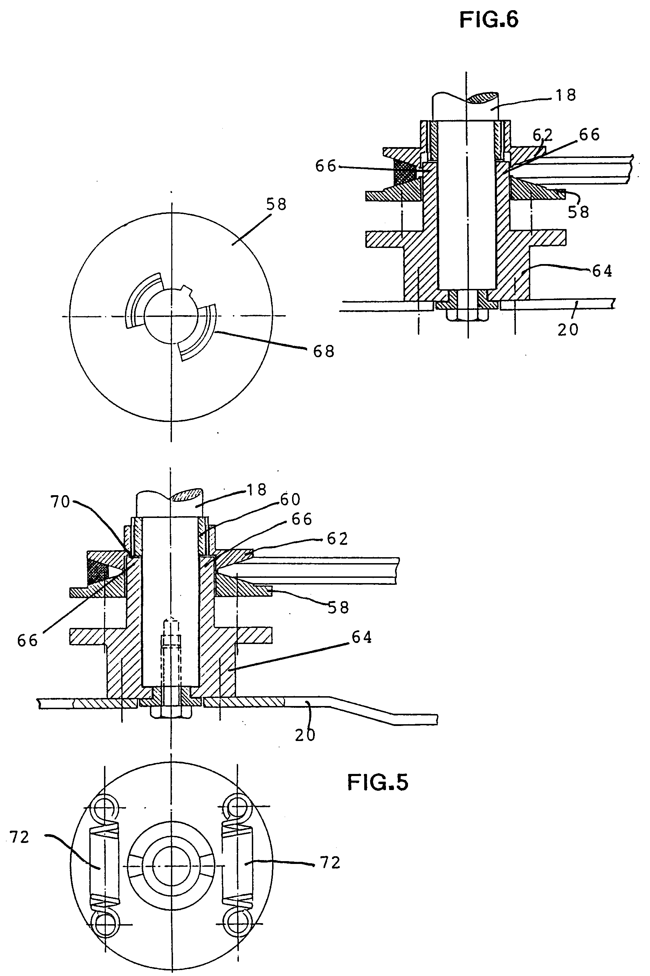

Die Figuren 2 bis 4 zeigen ein erstes Ausführungsbeispiel einer lastabhängig einstellbaren Keilriemenscheibe. Die Keilriemenscheibe 22 besteht aus einer begrenzt drehbar auf der Antriebswelle 18 sitzenden Riemenscheibenhälfte 30 und einer drehfest und axial auf der Antriebswelle 18 verschiebbaren Riemenscheibenhälfte 32. Die untere Riemenscheibenhälfte 30 wird von einer Nabe 34 getragen, die die Antriebswelle 18 umschließt und einen unteren, der Antriebswelle stirnseitig anliegenden Endflansch 36 aufweist. Von unten her wird der Endflansch 36 durch einen Ring 38 abgestützt, der durch eine axial in die Welle 18 eingeschraubte Schraube 40 gehalten wird. In eine Axialnut der Welle 18 ist eine Paßfeder 41 eingesetzt, und die Nabe 34 weist eine über ihren inneren Umfang über einen vorbestimmten Winkel verlaufende Ausnehmung 44 auf, so daß sich die untere Riemenscheibenhälfte 30 um diesen vorbestimmten Winkel relativ zur Welle 18 drehen kann. Demgegenüber bewirkt die Paßfeder 42 eine drehfeste Verbindung der oberen Riemenscheibenhälfte ohne Spiel. Eine an der Antriebwelle 18 axial abgestützte Tellerfeder 46 wirkt von oben her auf die obere axial bewegliche Riemenscheibenhälfte 32 und sucht diese nach unten zu drücken. Die beiden Riemenscheibenhälften 30 und 32 sind an ihren einander zugewandten Stirnringflächen 48 bzw. 50 mit drei im gleichen Winkelabstand zueinander angeordneten, in Umfangsrichtung ansteigenden Kugellaufbahnen 52 bzw. 54 versehen, die in den Figuren 4A und 4B in Abwicklung dargestellt sind. In diesen Kugellaufbahnen 52, 54 laufen Kugeln 56, die einen Kugelformschluß bilden. Im Leerlaufzustand, d.h. wenn der Messerbalken 20 keinen Widerstand findet, wird durch die Tellerfeder 46 die obere Riemenscheibenhälfte 32 auf die Riemenscheibenhälfte 30 gedrückt, so daß ihre Stirnringflächen 48 und 50 einander berühren. Diese Leerlaufstellung ist in Fig. 2 und in Fig. 4A dargestellt.

Mit zunehmender Last bzw. zunehmendem Drehmoment des Antriebsmotors 16 werden die beiden Riemenscheibenhälften 30, 32 gegen die Wirkung der Tellerfeder 46 gegeneinander verdreht, d.h. die untere Riemenscheibenhälfte 30 verdreht sich auf der Antriebswelle 18 bis sich im Vollastbereich die höchste Spreizstellung gemäß Fig. 3 bzw. gemäß Fig. 4B einstellt. Durch die über die Kugeln 56 bewirkte Axialverschiebung der oberen Riemenscheibenhälfte 32 verkleinert sich der wirksame Durchmesser dieser Riemenscheibe 22 und dadurch wird die Antriebsdrehzahl des Getriebes 28 und damit auch die Laufgeschwindigkeit der Antriebsräder 14 verringert.

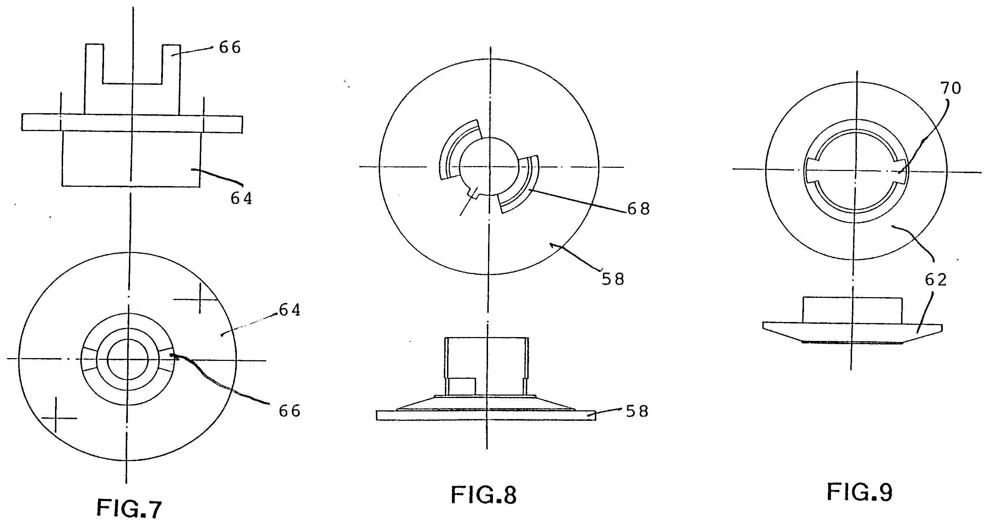

Bei dem Ausführungsbeispiel nach Fig. 5 bis 9 ist die untere Riemenscheibenhälfte 58 sowohl drehfest als auch axial nicht verschieblich mit der Antriebswelle 18 verbunden. Die Riemenscheibenhälfte 58 weist eine hülsenartige Nabe 60 mit einem steilen Außengewinde auf. Auf diesem Gewinde läuft ein Innengewinde der oberen Riemenscheibenhälfte 62. Der Messerbalken 20 ist an einem Kupplungsstück 64 angeschraubt, welches hülsenartig ausgebildet und auf der Welle 18 drehbar, jedoch gegenüber dieser axial nicht verschiebbar ist. Das Kupplungsstück 64 trägt zwei axial nach oben vorstehende Führungsstifte 66, die durch sektorförmig gestaltete Führungsschlitze 68 der unteren Riemenscheibenhälfte 58 hindurchgeführt sind (vgl. Fig.7 und 8). Die Enden der Führungsstifte 66 greifen in Ausnehmungen 70 der oberen Riemenscheibe 62 ein (Fig. 9).

Das Kupplungsstück 64 ist über Zugschraubenfedern (72) an die untere Riemenscheibe 58 angekoppelt.

Bei Drehung der Antriebswelle 18 wird der Messerbalken über das Kupplungsstück 64 und die Federn 72 im Leerlauf mitgenommen, wobei die Riemenscheibenhälften die Stellung gemäß Fig. 5 mit größtem Wirkungsradius einnehmen. Wenn der Messerbalken 20 einen Widerstand vorfindet, dreht sich die Kupplungshülse 64 gegen die Kraft der Federn 72 relativ zur Antriebswelle 18. Dabei nehmen die Führungsstifte 66 die obere Keilriemenscheibenhälfte 62 bei ihrer Bewegung um die Welle 18 mit, so daß die Riemenscheibenhälfte 62 auf dem Gewinde der Nabe 60 der festen Riemenscheibenhälfte 58 nach oben ausgehoben wird, so daß sich der wirksame Durchmesser der Riemenscheibe verringert und die Geschwindigkeit des Radantriebs zurückgesetzt wird. Die Figur 6 Zeigt die Stellung im Vollastbereich, wobei die Führungsstifte am Schlitzende anliegen und die Riemenscheibenhälften maximal gespreizt sind.

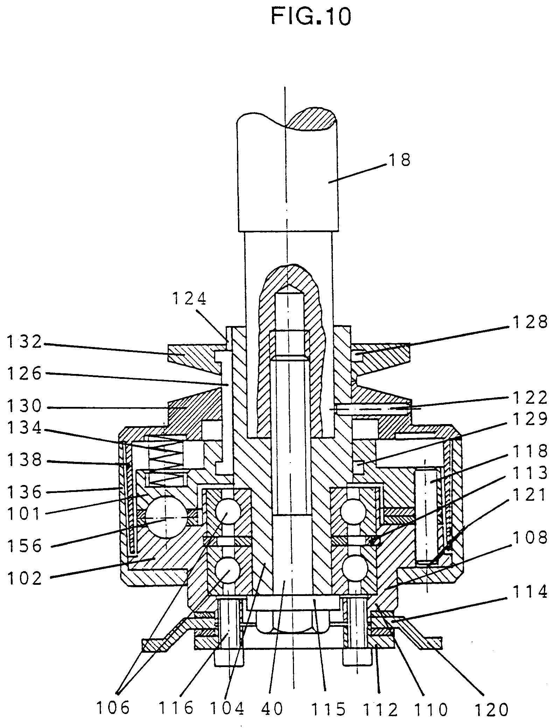

Figur 10 zeigt ein weiteres Ausführungsbeispiel eines auf der Rotorantriebswelle sitzenden Getriebes, welches sich von dem Getriebe gemäß Figur 2 bis 4 im wesentlichen dadurch unterscheidet, daß den Riemenscheibenhälften 130, 132 getrennte Steuerscheiben in Gestalt einer oberen Kugelscheibe 101 und einer unteren Kugelscheibe 102 zugeordnet sind. Hierdurch wird - wie aus der folgenden Beschreibung ersichtlich ist - erreicht, daß die beiden Riemenscheibenhälften 130 und 132 nicht mehr gegeneinander verdreht werden, sondern relativ zueinander ausschließlich axial zur Durchmesserveränderung bewegt werden. Bei diesem Ausführungsbeispiel ist der Messerbalken 120 nicht fest mit der Rotorwelle 18, sondern gegenüber dieser begrenzt verdrehbar angeordnet. In die Rotorwelle 18 ist eine Schraube 40 eingeschraubt, die über eine Scheibe 115 eine Führungshülse 104 auf der Welle 18 verspannt, derart, daß diese Führungshülse 104 drehfest und axial fest mit der Rotorwelle 18 verbunden ist. In einer unteren Ausdrehung trägt die Führungshülse Innenlaufringe zweier Kugellager 106, deren Außenlaufringe in dem Hülsenabschnitt 108 der unteren Kugelscheibe 102 eingesetzt sind. Ein nach innen einstehender unterer Ringflansch 110 stützt sich formschlüssig von unten her gegen den äußeren Laufring des unteren Kugellagers 106 ab und ein zwischen den beiden Kugellagern angeordneter Federring 113 steht in eine Innennut der Kugelscheibe ein, so daß diese axial gegenüber der Welle 18 festgelegt ist, sich jedoch gegenüber dieser drehen kann.

Mittels einer Kupplungsscheibe 112 ist der Innenflanschring 114 des Messerbalkens 120 über Schrauben 116 am unteren Flansch 110 der unteren Kugelscheibe 102 festgelegt.

Die obere Kugelscheibe 101 ist auf der Führungshülse 104 drehfest aber axial verschiebbar angeordnet. Zwischen den beiden Kugelscheiben 101 und 102 laufen Kugeln 156 auf Kugellaufbahnen, die derart angeordnet sind, daß bei einer gegenseitigen Verdrehung der beiden Kugelscheiben 101 und 102 eine axiale Spreizung erfolgt, d.h. die Kugellaufbahnen steigen in Umfangsrichtung an. Die relative Verdrehung der beiden Kugelscheiben wird durch Anschlagstifte 118 begrenzt, die in der oberen Kugelscheibe 101 eingesetzt sind und in Bogenschlitzen 121 der unteren Kugelscheibe laufen und an deren Enden anstoßen.

Die untere Riemenscheibenhälfte 130 ist mit Stiften 122 auf der Führungshülse 104 drehfest und axial unverschiebbar festgelegt. Die obere Riemenscheibenhälfte 132 sitzt über eine Keilverzahnung 124 drehfest auf der Führungshülse 104. Auf dieser Keilverzahnung 124 ist die obere Keilriemenscheibenhälfte 132 axial verschiebbar. Diese Keilriemenscheibe 132 steht mit der axial verschiebbaren oberen Kugelscheibe 101 axial formschlüssig über im Winkelabstand zueinander angeordnete Stifte 126 in Verbindung, die mit ihren oberen und unteren Hakenenden in eine innere Ringnut 128 der Riemenscheibenhälfte 132 bzw. in eine innere Ringnut 129 der oberen Kugelscheibe 101 eingreifen. Zwischen der unteren fest mit der Führungshülse verbundenen Riemenscheibenhälfte 130 und der axial verschiebbaren oberen Kugelscheibe 101 sind über den Umfang verteilt in Axialrichtung wirkende Druckschraubenfedern 134 angeordnet. Die Kugelscheiben sind von einem topfartigen Gehäuse 136 umschlossen. In dieses steht ein Ringflansch 138 ein, der sich von der unteren Riemenscheibenhälfte 130 nach unten erstreckt.

Der Zwischenraum zwischen dem Ringflansch 138 und dem Gehäuse 136 kann mit Fett oder dergl. gefüllt sein, was eine Viskositätsdämpfung der relativen Drehbewegung bewirkt.

Das in Fig. 10 dargestellte Getriebe arbeitet wie folgt:
Fig. 10 zeigt die Leerlaufstellung. Wird der Messerbalken 120 durch Auftreffen auf das Gras belastet, dann sucht sich dieser gegenüber der Rotorwelle 18 in Drehrichtung nach hinten zu drehen. Dies bewirkt, daß die untere Kugelscheibe 102 gegenüber der drehfest angeordneten oberen Kugelscheibe 101 verdreht wird, so daß über die Kugeln 156 die obere Kugelscheibe 101 axial gegen die Kraft der Federn 134 angehoben wird und über die Mitnehmerstifte 126 die obere Riemenscheibenhälfte 132 anhebt. Hierdurch vermindert sich der wirksame Keilriemendurchmesser und der Antrieb der Laufräder wird langsamer. Läßt das am Messerbalken 120 wirkende Drehmoment nach, so erfolgt über die Druckfedern 134 eine Rückführung der oberen Kugelscheibe 101 und der oberen Riemenscheibenhälfte 132 im Sinne einer Erhöhung der Drehzahl der Antriebsräder.

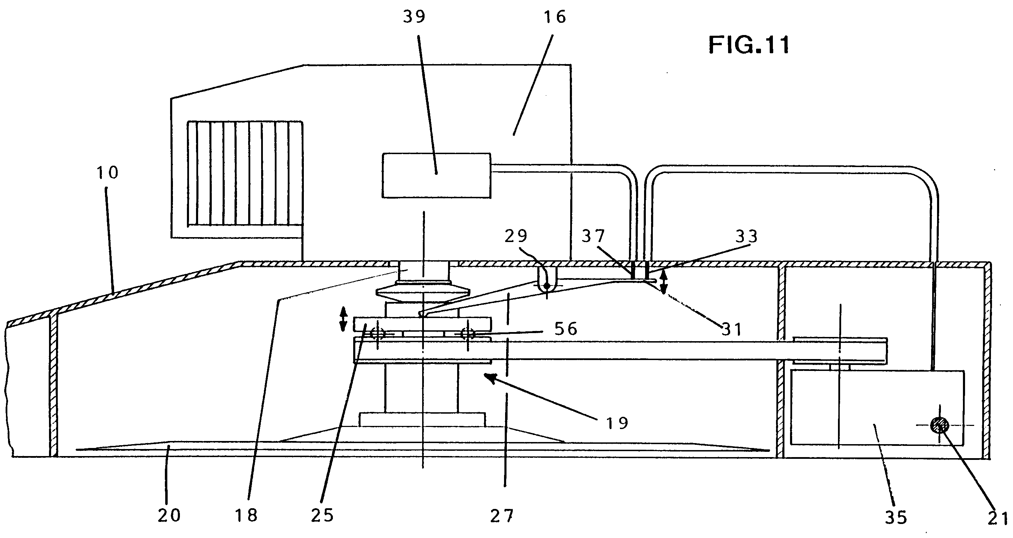

Fig. 11 zeigt eine schematische Darstellung eines Rasenmähers mit zwei weiteren Möglichkeiten der Fahrgeschwindigkeitseinstellung. Der Rasenmäher weist ein Chassis 10, einen Antriebsmotor 16, einen Messerbalken 20, der über eine vertikale Rotorwelle 18 vom Motor 16 angetrieben wird, sowie ein Keilriemenscheibengetriebe 19 mit fester Übersetzung auf. Die Getriebeabtriebswelle 21 trägt die Laufräder. Auf der Antriebswelle 18 sitzt eine schematisch dargestellte Regelscheibe 25, die als Kugelscheibe ausgebildet ist und mittels Kugeln mit einer unteren Kugelscheibe zusammenwirkt, die in diesem Fall von der Oberfläche der Keilriemenscheibe gebildet werden kann. Bei Änderung der Belastung erfolgt eine Axialverschiebung der Regelscheibe 25. Die Getriebeanordnung, die diese Axialverschiebung bewirkt, kann gemäß einem der oben beschriebenen Ausführungsbeispiele ausgebildet sein. Aus diesem Grunde brauchen nähere konstruktive Einzelheiten an dieser Stelle nicht erläutert zu werden. Es ist lediglich festzustellen, daß bei Erhöhung des Abtriebsdrehmoments die Regelscheibe 25 angehoben wird, und bei Verminderung des Drehmoments (Lastabfall) eine Axialbewegung nach unten erfolgt. Mit der Regelscheibe 25 wirkt ein Übertragungshebel 27 zusammen, der als doppelarmiger Hebel ausgebildet und um eine chassisfeste Achse 29 schwenkbar gelagert ist. Das andere Ende 31 des Übertragungshebels 27 bewirkt eine Stellbewegung. Zwei Ausführungsbeispiele sind in der Zeichnung vereinigt. Gemäß dem ersten Ausführungsbeispiel ist mit dem Ende 31 des Übertragungshebels ein erster Bowdenzug 33 verbunden, der nach einem Verstellgetriebe 35 führt. Dieses Verstellgetriebe 35 kann ein mechanisches Variogetriebe oder ein hydrostatisches Verstellgetriebe oder ein anderes handelsübliches Getriebe sein, welches über ein Stellglied veränderbar ist. Die Anordnung ist dabei derart getroffen, daß bei Verschwenkung des Übertragungshebels 27 im Uhrzeigersinn gemäß Fig. 11 (Erhöhung des Abtriebsdrehmoments, Ansteigen der Regelscheibe 25) über den Bowdenzug 33 das Getriebe 35 im Sinne einer Untersetzung ins Langsame betätigt wird. Bei Verminderung des Abtriebsdrehmoments erfolgt eine Verstellung in umgekehrtem Sinne.

Stattdessen oder zusätzlich kann der Übertragungshebel 27 mit seinem Ende 31 auf einen weiteren Bowdenzug 37 einwirken, der die Reglerfeder 39 des Motors verstellt und damit das Drehzahl- und Leistungsniveau der Motorbelastung anpaßt. Der Übertragungshebel 27 schleift mit seinem linken Ende auf der Regelscheibe 25 und wird durch deren axiale Verstellung verschwenkt.

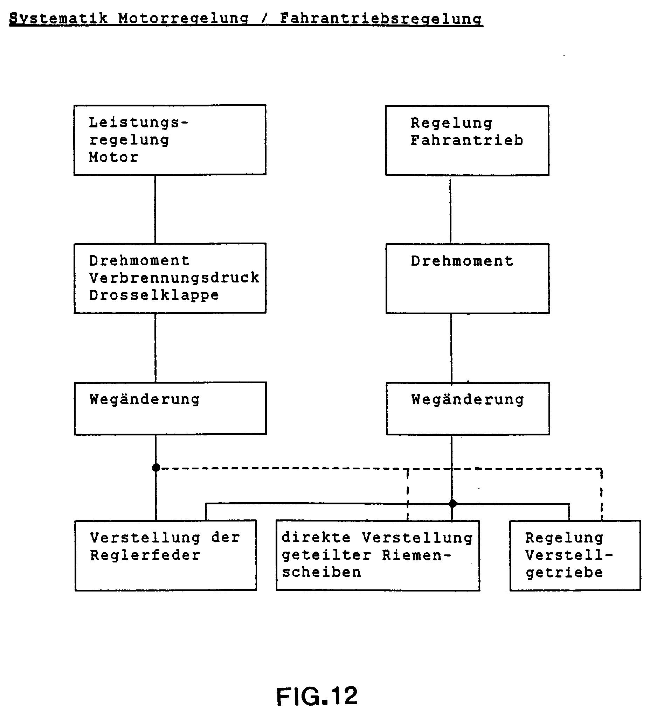

Fig. 12 zeigt ein Blockschaltbild, welches die Systematik Motorregelung/Fahrtantriebsregelung erkennen läßt, wie sie durch die vorliegende Erfindung verwirklicht wird. Danach ist es denkbar, die sich aus einer Belastungsänderung ergebende Wegdifferenz, insbesondere die axiale Verschiebung einer Regelscheibe zu nutzen, um damit die Fahrgeschwindigkeit zu ändern. Die im Zusammenhang mit den beschriebenen Ausführungsbeispielen angestrebte Fahrantriebsregelung kann in Kombination mit einer Motorleistungsregelung Anwendung finden, wie diese in der DE-OS 42 01 151 beschrieben ist, d.h. es kann aus dem bei Belastung des Rotors auftretenden Reaktionsdrehmoment eine Stellgröße abgeleitet werden, durch die die Drehzahl und/oder die Leistung und/oder das Drehmoment des Antriebsmotors gesteuert oder erforderlichenfalls geregelt wird. Eine derartige Steuerung würde der gestrichelten Linie in Figur 13 entsprechen.

Gemäß den vorstehend beschriebenen Ausführungsbeispielen wurde als Getriebe ein stufenloses Getriebe vorgesehen, welches lastabhängig gesteuert eine stufenlose Geschwindigkeitseinstellung bewirkte. Stattdessen kann das Getriebe auch als Stufengetriebe, insbesondere als zweistufiges Getriebe, ausgelegt werden. Diese vereinfachte Ausführungsform kann dadurch geschaltet werden, daß bei Überschreiten eines vorbestimmten Lastdrehmoments das gegen Federkraft vorgespannte Stellglied in eine zweite Schaltstellung schnappt und bei Unterschreiten der Last in die erste Schaltstellung zurückkehrt. Zur Verwirklichung dieser Schaltfunktion sind zahlreiche einfache, für den Fachmann geläufige Schaltanordnungen denkbar.

### Bezugszeichenliste

- 10: Chassis
- 12: Laufräder
- 14: Antriebsräder
- 16: Motor
- 18: Rotor-Antriebswelle
- 19: Keilriemenscheibengetriebe
- 20: Messerbalken
- 21: Getriebeabtriebswelle
- 22: Keilriemenscheibe
- 24: Keilriemen
- 25: Regelscheibe
- 26: Keilriemenscheibe
- 27: Übertragungshebel
- 28: Getriebe
- 29: Achse
- 30: feste Riemenscheibenhälfte
- 31: anderes Ende
- 32: axial verschiebbare Riemenscheibenhälfte
- 33: Bowdenzug
- 34: Nabe
- 35: Verstellgetriebe
- 36: Endflansch
- 37: Bowdenzug
- 38: Ring
- 39: Reglerfeder
- 40: Schraube
- 41: Paßfeder
- 42: Paßfeder
- 44: Ausnehmung
- 46: Tellerfeder
- 48,50: Stirnringflächen
- 52,54: Kugellaufbahnen
- 56: Kugel
- 58: Riemenscheibenhälfte
- 60: Nabe
- 62: Riemenscheibenhälfte
- 64: Kupplungsstück
- 66: Führungsstifte
- 68: Führungsschlitze
- 70: Ausnehmungen
- 72: Zugschraubenfedern
- 101,102: Kugelscheibe
- 104: Führungshülse
- 106: Kugellager
- 108: Hülsenabschnitt
- 110: Ringflansch
- 112: Kupplungsscheibe
- 113: Federring
- 114: Innenflanschring
- 115: Scheibe
- 116: Schraube
- 118: Anschlagstifte
- 120: Messerbalken
- 121: Bogenschlitze
- 122: Stifte
- 124: Keilverzahnung
- 126: Stifte
- 128: Ringnut
- 129: innere Ringnut
- 130,132: Riemenscheibenhälften
- 134: Druckschraubenfedern
- 136: topfartiges Gehäuse
- 138: Ringflansch
- 156: Kugeln

## Patentansprüche

1. Fahrbares Gartengerät mit einem Motor zum Antrieb der Werkzeuge und der Räder,
dadurch gekennzeichnet, daß dem Fahrantrieb (28) ein Getriebe oder ein Regler vorgeschaltet ist, mit welchem die Fahrgeschwindigkeit in Abhängigkeit einer Betriebsgröße der Werkzeuge im Sinne einer optimalen Funktion dieser Werkzeuge eingestellt wird.

2. Gartengerät nach Anspruch 1,
dadurch gekennzeichnet, daß die Werkzeuge (20) von dem Motor (16) direkt angetrieben werden und daß zwischen der Motorwelle (18) und dem Fahrantrieb (28) ein Getriebe angeordnet ist, welches mit zunehmender Belastung der Antriebswelle durch die Werkzeuge eine Verminderung der Fahrgeschwindigkeit und umgekehrt bewirkt.

3. Gartengerät nach den Ansprüchen 1 und 2,
dadurch gekennzeichnet, daß das Getriebe ein stufenloses Getriebe ist.

4. Gartengerät nach Anspruch 3,
dadurch gekennzeichnet, daß das Getriebe ein Keilriemenscheibengetriebe mit variablem Wirkdurchmesser ist.

5. Gartengerät nach Anspruch 4,
dadurch gekennzeichnet, daß auf der Motorantriebswelle (18) die eine Keilriemenscheibehälfte (32; 58) drehfest aufgesetzt ist und die andere (30; 62) begrenzt drehbar ist, wobei eine lastabhängige, gegen eine Feder (46; 72) wirkende Relativverdrehung der beiden Keilriemenscheibenhälften eine Durchmesseränderung bewirkt.

6. Gartengerät nach Anspruch 5,
dadurch gekennzeichnet, daß zwischen den einander zugewandten Stirnringflächen der Keilriemenscheibenhälften ein die Scheiben bei Relativverdrehung spreizender Kugelformschluß (52, 54, 56) vorgesehen ist.

7. Gartengerät nach Anspruch 6,
dadurch gekennzeichnet, daß die einander zugewandten Stirnringflächen (48, 50) der Riemenscheibenhälften Kugellaufbahnen (52, 54) aufweisen, die in Umfangsrichtung ansteigen und Laufkugeln (56) aufnehmen.

8. Gartengerät nach Anspruch 7,
dadurch gekennzeichnet, daß die axial gegenüber der Riemenscheibenhälfte (30) bewegliche Riemenscheibenhälfte (32), die drehfest auf der Welle (18) sitzt, axial von einer Tellerfeder (46) beaufschlagt ist.

9. Gartengerät nach Anspruch 5,
dadurch gekennzeichnet, daß die beiden Riemenscheibenhälften (58, 62) über ein Steilgewinde verbunden sind.

10. Gartengerät nach den Ansprüchen 5 und 9,
dadurch gekennzeichnet, daß auf der Antriebswelle (18) eine das Werkzeug (20) tragende Kupplungshülse (64) drehbar gelagert ist, die mit Führungsstiften (66) in die begrenzt drehbar gelagerte Riemenscheibenhälfte (62) eingreift, wobei die hiermit zusammenwirkende Riemenscheibenhälfte (58) drehfest und axial unverschieblich auf der Welle (18) sitzt.

11. Gartengerät nach Anspruch 10,
dadurch gekennzeichnet, daß die begrenzt drehbar gelagerte Kupplungshülse (64) über Zugfedern (72) an die Riemenscheibenhälfte (58) derart angekoppelt ist, daß die Federn die Riemenscheibenhälften in ihre Ausgangsstellung (größter Wirkdurchmesser) zu ziehen trachten.

12. Gartengerät nach einem der Ansprüche 1 bis 11,
dadurch gekennzeichnet, daß der Antriebsmotor (16) derart gesteuert ist, daß bei zunehmender Belastung die Drehzahl ansteigt, wobei der Drehzahlanstieg durch Fahrgeschwindigkeitsverminderung kompensiert wird.

13. Gartengerät nach den Ansprüchen 1 und 2,
dadurch gekennzeichnet, daß das Getriebe ein Geschwindigkeitsstufengetriebe, insbesondere ein Zweistufengetriebe ist.

14. Gartengerät nach den Ansprüchen 1 bis 4,
dadurch gekennzeichnet, daß die beiden Keilriemenscheibenhälften (130, 132) drehfest miteinander verbunden sind und daß die Verstellung der einen Scheibenhälfte (132) über eine Kugelscheibe (101) erfolgt, die axial formschlüssig mit der Riemenscheibenhälfte (132) gekoppelt ist und mit dieser drehfest auf der Abtriebswelle (18) sitzt, und daß mit dieser Kugelscheibe (101) über Stellkugeln (156) eine Kugelscheibe (102) zusammenwirkt, die drehfest mit dem Messerbalken (120) und drehbar gegenüber der Messerantriebswelle (18) ist. (Fig. 10)

15. Gartengerät nach Anspruch 14,
dadurch gekennzeichnet, daß zwischen der fest mit der Abtriebswelle (18) verbundenen Keilriemenscheibenhälfte (130) und der axial beweglichen Kugelscheibe (101) Druckschraubenfedern (134) im gleichen Winkelabstand angeordnet sind.

16. Gartengerät nach den Ansprüchen 14 oder 15,
dadurch gekennzeichnet, daß auf der Abtriebswelle (18) eine Führungshülse (104) aufgespannt (40) ist, die über Kugellager (106) die untere Kugelscheibe (102) lagert.

17. Gartengerät nach den Ansprüchen 14 bis 16,
dadurch gekennzeichnet, daß der Messerbalken an der unteren Kugelscheibe (102) fixiert ist.

18. Gartengerät nach den Ansprüchen 14 bis 17,
dadurch gekennzeichnet, daß eine der Kugelscheiben (101, 102) einen oder mehrere Anschlagstifte (118) trägt, die axial in einen Bogenschlitz der gegenüberliegenden Kugelscheibe einstehen und eine Drehbegrenzung bewirken.

19. Gartengerät nach einem der Ansprüche 14 bis 18,
dadurch gekennzeichnet, daß die Formschlußverbindung zwischen oberer Kugelscheibe (101) und oberer Riemenscheibenhälfte (132) durch im gleichen Winkelabstand angeordnete Hakenstifte erfolgt, die in der festen Riemenscheibenhälfte (130) geführt sind und die mit ihren Endhaken in Nuten (128, 129) von Riemenscheibenhälfte (132) bzw. Kugelscheibe (101) formschlüssig eingreifen.

20. Gartengerät nach den Ansprüchen 1 bis 3,
dadurch gekennzeichnet, daß auf der Radantriebswelle (21) ein Verstellgetriebe (35) sitzt, dessen Antriebswelle mit einer der Drehzahl der Motorwelle (18) proportionalen Drehzahl angetrieben wird und dessen Stellglied (33) in Abhängigkeit von dem Lastdrehmoment eingestellt wird. (Fig. 11)

21. Gartengerät nach Anspruch 20,
dadurch gekennzeichnet, daß auf der Motorwelle (18) axial verschieblich eine drehmomentabhängig verschiebbare Regelscheibe (25) gelagert ist, die über einen Übertragungshebel (27) das Stellglied (33) des Verstellgetriebes einstellt.

22. Gartengerät nach den Ansprüchen 1 und 2,
dadurch gekennzeichnet, daß eine auf der Motorwelle (18) drehmomentabhängig verschiebbare Reglerscheibe (25) an einem Stellglied (27) der Motorreglerfeder (39) angreift.

23. Gartengerät nach den Ansprüchen 20 bis 22,
dadurch gekennzeichnet, daß das drehmomentabhängig verstellbare Übertragungsglied (27) das Stellglied (33) des Verstellgetriebes (35) und gleichzeitig über das Stellglied (37) die Motorreglerfeder verstellt.

24. Gartengerät nach einem der Ansprüche 1 bis 23,
dadurch gekennzeichnet, daß die Fahrgeschwindigkeitssteuerung mit einer Vorrichtung zur Steuerung der Drehzahl und/oder der Leistung und/oder des Drehmoments des Antriebsmotors (16) kombiniert ist, der gemäß dem bei Belastung des Rotors im Stator auftretenden Reaktionsdrehmomentes über eine hieraus abgeleitete Stellgröße gesteuert oder geregelt wird.

25. Gartengerät, nach einem der Ansprüche 14 bis 19,
dadurch gekennzeichnet, daß der Zwischenraum zwischen einem Ringflansch (138) der unteren Riemenscheibenhälfte (132) und einem topfartigen Gehäuse (136) mit einem hochviskosen Stoff z.B. Fett ausgefüllt ist, um eine Viskositätsdämpfung der relativen Drehbewegung zu bewirken.
